# EUROPEAN PATENT APPLICATION

(11) **EP 4 684 869 A1**
(43) Date of publication of application: **28.01.2026**
(21) Application number: 25191528.6
(22) Date of filing: 24.07.2025
(51) Int. Cl.: B01J 3/00, B01J 3/04, B01J 19/00, B01J 19/20

(54) **HYDROLYSIS SYSTEM HAVING A PRESSURE RELIEF DEVICE**

(30) Priority: 26.07.2024 TW 113127866
(71) Applicant: Lee, Ming-Chiu, Taoyuan City 337 (TW)
(72) Inventor: LEE, Ming-Chiu, 337 Taoyuan City (TW); SUN, Hao-Lun, 337 New Taipei City (TW)
(74) Representative: Regimbeau

(57) **Abstract**

A hydrolysis system includes a hydrolysis furnace (1) and a pressure relief device (2). The hydrolysis furnace (1) has a reaction space (10) therein, and a ventilation hole (15) spatially communicating with the reaction space (10). The pressure relief device (2) includes a pressure relief (21) tube connected to the hydrolysis furnace (1), adjacent to the ventilation hole (15), extending in an up-down direction (D1), and defining a first tube space that spatially communicates with the ventilation hole (15). The pressure relief device (2) further includes at least one auxiliary tube (22) disposed at an end portion of the pressure relief tube (21) opposite to the hydrolysis furnace (1) in the up-down direction (D1), extending in a left-right direction (D2) that is substantially perpendicular to the up-down direction (D1), and defining a second tube space that spatially communicates with the ventilation hole (15).

## Description

The disclosure relates to a hydrolysis system, and more particularly to a hydrolysis system having a pressure relief device.

Chinese Utility Model Patent Publication No. 2309715Y discloses a conventional hydrolysis system including a furnace that includes a plurality of heating tubes, an inner tube and an outer tube that cooperatively form a pot body, a safety valve, and an exhaust valve. The inner tube defines an inner space that spatially communicates with the safety valve and the exhaust valve. The inner tube and the outer tube cooperatively define a chamber therebetween. Heat-transmitting substance is contained in the heating tubes. An operation method of the conventional hydrolysis system is as follows. Feathers and sufficient water are put in the inner space; then, the pot body is put onto the furnace, which causes the heat-transmitting substance in the heating tubes to enter the chamber, and the feathers and water in the inner tube are hydrolyzed. After the feathers and water in the inner tube are hydrolyzed, steam is released through the exhaust valve to relieve pressure.

However, by-products (e.g., particles) of the hydrolyzing process are also released along with the steam through the exhaust valve, which causes contamination.

Therefore, an object of the disclosure is to provide a hydrolysis system that can alleviate at least one of the drawbacks of the prior art.

According to an aspect of the disclosure, there is provided a hydrolysis system according to claim 1.

Other features and advantages of the disclosure will become apparent in the following detailed description of the embodiment(s) with reference to the accompanying drawings. It is noted that various features may not be drawn to scale.
Figure 1 is a fragmentary perspective view illustrating an embodiment of a hydrolysis system according to the disclosure.
Figure 2 is a perspective view of a mixer module of the embodiment.
Figure 3 is a fragmentary side view of the embodiment.
Figure 4 is a sectional view of the embodiment.
Figure 5 is a sectional view of a pressure relief device of the embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

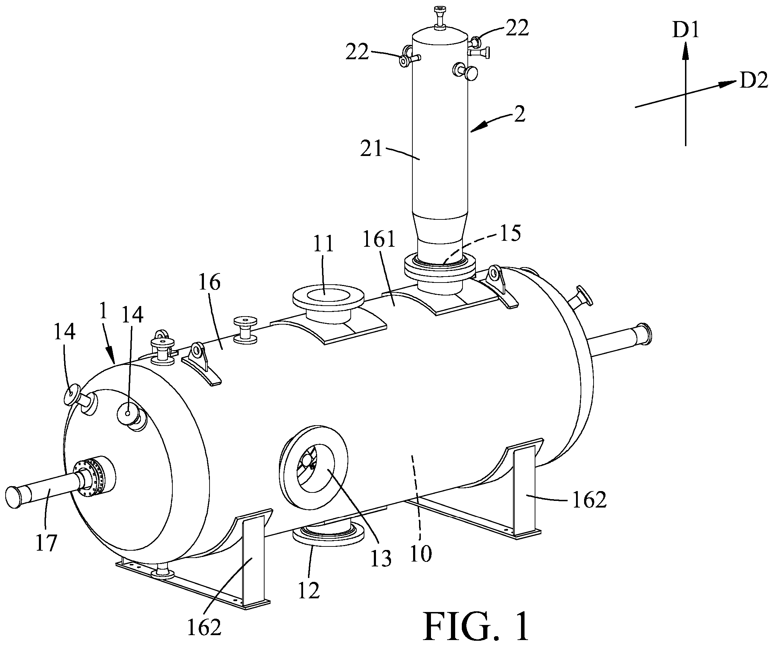

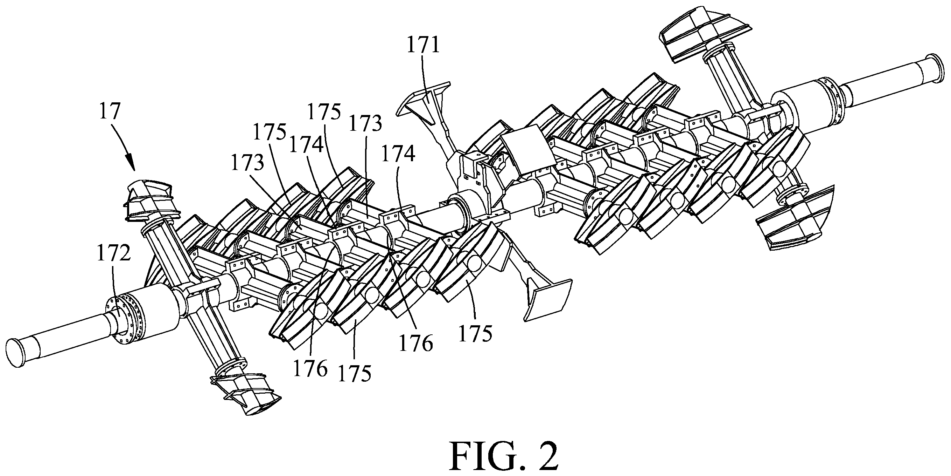

Referring to Figures 1 and 2, an embodiment of a hydrolysis system according to the disclosure is adapted for connection with a temperature control device (not shown), a pressure control device (not shown), and an air treatment device (not shown) for hydrolyzing a substance.

The hydrolysis system includes a hydrolysis furnace 1, and a pressure relief device 2 connected to the hydrolysis furnace 1.

The hydrolysis furnace 1 has a reaction space 10 therein, a feed hole 11 spatially communicating with the reaction space 10 and adapted for allowing a substance to enter the reaction space 10, an output hole 12 spatially communicating with the reaction space 10 and adapted for allowing the substance to exit the reaction space 10, a maintenance hole 13 spatially communicating with the reaction space 10, two steam holes 14 spatially communicating with the reaction space 10, and adapted for allowing high-pressure steam to enter the reaction space 10, and a ventilation hole 15 spatially communicating with the reaction space 10. The hydrolysis furnace 1 includes a feed valve (not shown) disposed in the feed hole 11, an output valve (not shown) disposed in the output hole 12, and a maintenance cap (not shown) covering the maintenance hole 13. In this embodiment, the feed valve and the output valve are ball valves, and the maintenance cap is a blind flange.

The hydrolysis furnace 1 further includes an outer shell 16 that defines the reaction space 10 therein and that has the feed hole 11, the output hole 12, the maintenance hole 13 ,the steam holes 14, and the ventilation hole 15, and a mixer module 17 that is disposed in the reaction space 10. In this embodiment, the hydrolysis furnace 1 has a capacity of 5-15m³. The substance may be feathers, poultry scraps (e.g., heads or feet of poultry), or a combination of both. The steam holes 14 are adapted for connection with a boiler (not shown).

The outer shell 16 includes a shell body 161 and two support members 162 disposed at a bottom side of the shell body 161.

The mixer module 17 includes a mixer rack 171 that is fixed to the outer shell 16 and that is disposed in the reaction space 10, a load rod 172 that extends in a left-right direction (D2) and that is rotatably mounted to the mixer rack 171, and a plurality of mixer rods 173 that are fixed to the load rod 172 and that are spaced apart from each other in the left-right direction (D2).

Each of the plurality of mixer rods 173 has a rod body 174 that has an installation hole 176, and two plate bodies 175 that are disposed on two opposite ends of the rod body 174. The load rod 172 extends through the installation hole 176 of the rod body 174 of each of the plurality of mixer rods 173.

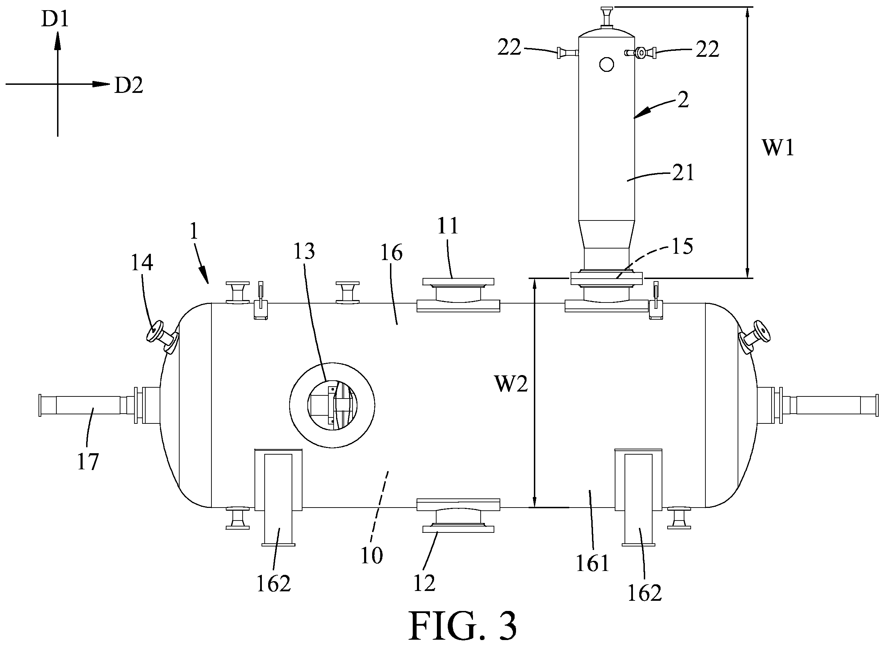

Referring to Figure 3, the pressure relief device 2 includes a pressure relief tube 21, at least one auxiliary tube 22, and a sensor (not shown). The pressure relief tube 21 is connected to the hydrolysis furnace 1, is adjacent to the ventilation hole 15, extends in an up-down direction (D1) that is substantially perpendicular to the left-right direction (D2), and defines a first tube space that spatially communicates with the ventilation hole 15. The at least one auxiliary tube 22 is disposed at an end portion of the pressure relief tube 21 opposite to the hydrolysis furnace 1 in the up-down direction (D1). In this embodiment, the at least one auxiliary tube 22 includes two auxiliary tubes 22. The sensor is disposed in one of the auxiliary tubes 22 and is for sensing pressure or temperature of a corresponding area in the one of the auxiliary tubes 22. A height (W1) of the pressure relief device 2 in the up-down direction (D1) is not smaller than a height (W2) of the shell body 161 in the up-down direction (D1). In this embodiment, an inner diameter of the pressure relief tube 21 is 15-25 inches.

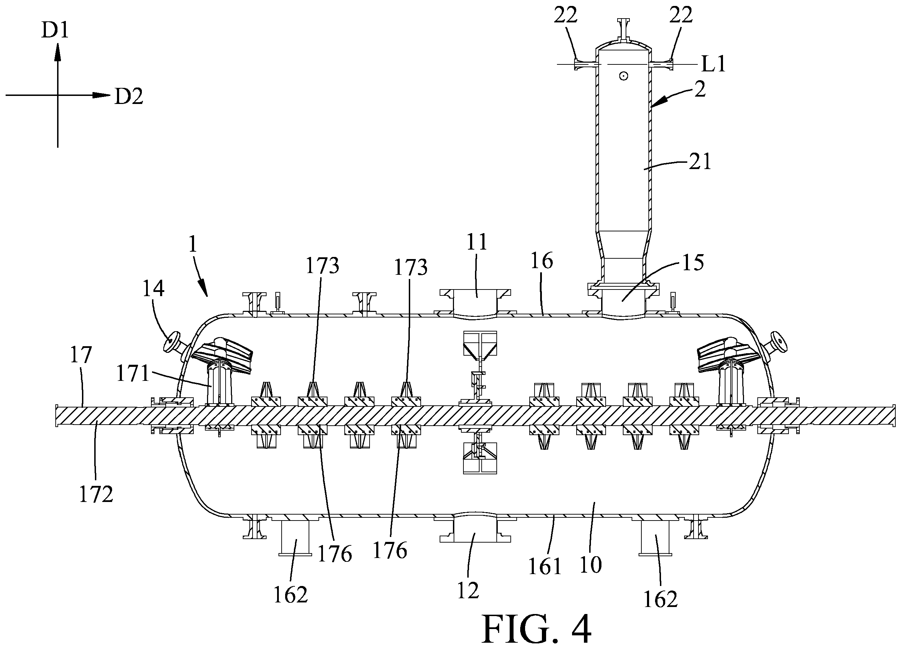

Referring to Figure 4, each of the auxiliary tubes 22 extends in the left-right direction (D2), and defines a second tube space that spatially communicates with the first tube space and the ventilation hole 15. The auxiliary tubes 22 extend along an axis (L1) that extends in the left-right direction (D2), and are adapted for connection with the air treatment device, and for letting steam and by-products of the hydrolysis process, such as particles, pass therethrough. It should be noted that, a number of the auxiliary tubes 22 can be changed to one or more than two, or as needed in other embodiments.

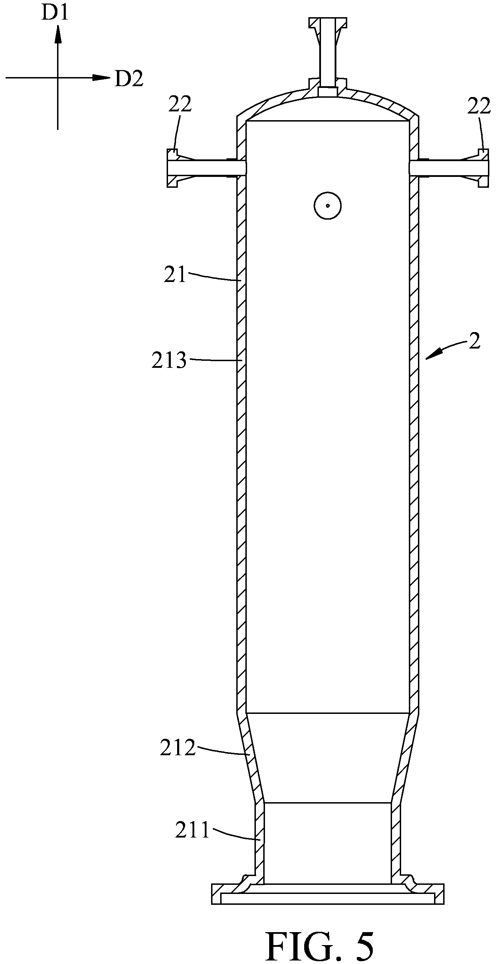

Referring to Figure 5, the pressure relief tube 21 has a small-diameter portion 211 connected to a top side of the hydrolysis furnace 1, an expansion portion 212 extending from a top end of the small-diameter portion 211, and a large-diameter portion 213 extending from a top end of the expansion portion 212. A diameter of the expansion portion 212 gradually increases in the up-down direction (D1) from an end thereof that is adjacent to the small-diameter portion 211 to another end thereof that is adjacent to the large-diameter portion 213. The expansion portion 212 interconnects the small-diameter portion 211 and the large-diameter portion 213. The small-diameter portion 211 defines a first space, the expansion portion 212 defines a second space, and the large-diameter portion 213 defines a third space, and the first space, the second space, and the third space spatially communicate with each other. It should be noted that, the first space, the second space, and the third space cooperatively form the first tube space.

An operation process of the hydrolysis system is as follows. First, the substance is disposed in the reaction space 10 through the feed hole 11. Then, after the feed valve closes the feed hole 11, the temperature control device increases the temperature in the reaction space 10, and the pressure control device increases the pressure in the reaction space 10. It should be noted that, at this time, the output hole 12, the maintenance hole 13, and the ventilation hole 15 are closed. Steam flows into the reaction space 10 through the steam holes 14. The mixer module 17 stirs the substance in the reaction space 10, and the substance is hydrolyzed. Then, the ventilation hole 15 is opened, and the steam and a portion of the by-products of the hydrolysis process flow into the pressure relief device 2 through the ventilation hole 15. Finally, the output hole 12 is opened, and the hydrolyzed substance and the remaining by-products exit the reaction space 10 through the output hole 12.

The hydrolysis system has the following effects.
1. The first tube space and the second tube space act as a buffer space for the steam and the by-products to pass through. The configuration of the expansion portion 212 slows movement speeds of the steam and the by-products, and the height (W1) of the pressure relief device 2 ensures that a distance between the hydrolysis furnace 1 and the air treatment device is sufficient such that the by-products and steam are prevented from surging into the air treatment device in large quantities when the ventilation hole 15 is opened, thereby decreasing the workload of the air treatment device, and decreasing the chances of the by-products contaminating and damaging the sensor.
2. Since the height (W1) of the pressure relief device 2 in the up-down direction (D1) is not smaller than the height (W2) of the shell body 161 in the up-down direction (D1), the buffer space has sufficient length to prevent the steam and the by-products from entering the air treatment device in large quantities, thereby decreasing the workload of the air treatment device.

In conclusion, the hydrolysis system alleviates the problem of the by-products entering the air treatment device in large quantities. Hence, the objective of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A hydrolysis system including:
a hydrolysis furnace (1) that has a reaction space (10) therein, and a ventilation hole (15) spatially communicating with said reaction space (10);
**characterized in that**:
said hydrolysis system includes a pressure relief device (2) that includes
a pressure relief tube (21) connected to said hydrolysis furnace (1), adjacent to said ventilation hole (15), extending in an up-down direction (D1), and defining a first tube space that spatially communicates with said ventilation hole (15), and
at least one auxiliary tube (22) disposed at an end portion of said pressure relief tube (21) opposite to said hydrolysis furnace (1) in the up-down direction (D1), extending in a left-right direction (D2) that is substantially perpendicular to the up-down direction (D1), and defining a second tube space that spatially communicates with said ventilation hole (15).

2. The hydrolysis system as claimed in claim 1, wherein:
said pressure relief tube (21) has a small-diameter portion (211) connected to a top side of said hydrolysis furnace (1), an expansion portion (212) extending from a top end of said small-diameter portion (211), and a large-diameter portion (213) extending from a top end of said expansion portion (212), a diameter of said expansion portion (212) gradually increasing in the up-down direction (D1) from an end thereof that is adjacent to said small-diameter portion (211) to another end thereof that is adjacent to said large-diameter portion (213), said expansion portion (212) interconnecting said small-diameter portion (211) and said large-diameter portion (213); and
said small-diameter portion (211) defines a first space, said expansion portion (212) defines a second space, and said large-diameter portion (213) defines a third space, said first space, said second space, and said third space spatially communicating with each other.

3. The hydrolysis system as claimed in any one of claims 1 and 2, wherein said at least one auxiliary tube (22) includes two auxiliary tubes (22), said auxiliary tubes (22) extending along an axis (L1) that extends in the left-right direction (D2).

4. The hydrolysis system as claimed in any one of claims 1 to 3, wherein said hydrolysis furnace (1) includes an outer shell (16) that defines said reaction space (10) therein and that has said ventilation hole (15), and a mixer module (17) that is disposed in said reaction space (10).

5. The hydrolysis system as claimed in claim 4, wherein said outer shell (16) includes a shell body (161) and two support members (162) disposed at a bottom side of said shell body (161), a height (W1) of said pressure relief device (2) in the up-down direction (D1) being not smaller than a height (W2) of said shell body (161) in the up-down direction (D1).

6. The hydrolysis system as claimed in claim 5, wherein said mixer module (17) includes a mixer rack (171) that is fixed to said outer shell (16) and that is disposed in said reaction space (10), a load rod (172) that is rotatably mounted to said mixer rack (171), and a plurality of mixer rods (173) that are fixed to said load rod (172) and that are spaced apart from each other in the left-right direction (D2).

7. The hydrolysis system as claimed in claim 6, wherein each of said plurality of mixer rods (173) has a rod body (174) having an installation hole (176), and two plate bodies (175) disposed on two opposite ends of said rod body (174), said load rod (172) extending through said installation hole (176) of said rod body (174) of each of said plurality of mixer rods (173).
